# EUROPÄISCHE PATENTSCHRIFT

(11) **EP 4 176 479 B1**
(45) Veröffentlichungstag und Bekanntmachung des Hinweises auf die Patenterteilung: **12.02.2025**
(21) Anmeldenummer: 21731142.2
(22) Anmeldetag: 08.06.2021
(51) Int. Cl.: H01M 8/04537, H01M 8/248

(54) **BRENNSTOFFZELLENSTAPEL, BRENNSTOFFZELLENVORRICHTUNG SOWIE KRAFTFAHRZEUG MIT EINER BRENNSTOFFZELLENVORRICHTUNG**
FUEL CELL STACK, FUEL CELL DEVICE AND MOTOR VEHICLE COMPRISING A FUEL CELL DEVICE
EMPILEMENT DE PILES À COMBUSTIBLE, DISPOSITIF DE PILE À COMBUSTIBLE ET VÉHICULE AUTOMOBILE COMPORTANT UN DISPOSITIF DE PILE À COMBUSTIBLE

(30) Priorität: 28.10.2020 DE 102020128312
(43) Veröffentlichungstag der Anmeldung: 10.05.2023
(73) Patentinhaber: Audi AG, 85045 Ingolstadt (DE)
(72) Erfinder: KEITSCH, Oliver, 74076 Heilbronn (DE); SIEBEL, Armin, 74172 Neckarsulm (DE); VOIGT, Sebastian, 74074 Heilbronn (DE)
(74) Vertreter: Hentrich Patent- & Rechtsanwaltspartnerschaft mbB
(86) Internationale Anmeldenummer: PCT/EP2021/065206
(87) Internationale Veröffentlichungsnummer: WO 2022/089787

(56) Entgegenhaltungen:
- DE-A1- 102018 127 490
- JP-A- 2014 007 152
- US-A1- 2005 213 409

## Beschreibung

Die Erfindung betrifft einen Brennstoffzellenstapel mit einer Mehrzahl von in Stapelrichtung angeordneten, mittels Spannelementen verspannten Brennstoffzellen, von denen mindestens eine, vorzugsweise jede einen Zellspannungsabgriff aufweist zur elektrischen Verbindung mit einer Zellüberwachungseinheit, wobei der mindestens eine Zellspannungsabgriff durch mindestens eines der Spannelemente mechanisch hinsichtlich der Verbindung mit den Brennstoffzellen gesichert sind. Die Erfindung betrifft weiterhin eine Brennstoffzellenvorrichtung sowie ein Kraftfahrzeug mit einer Brennstoffzelenvorrichtung.

Brennstoffzellen werden für die chemische Umsetzung eines Brennstoffs mit Sauerstoff zu Wasser genutzt, um elektrische Energie zu erzeugen. Hierfür enthalten Brennstoffzellen als Kernkomponente eine sogenannte Membranelektrodenanordnung, die ein Verbund aus einer protonenleitenden Membran und jeweils einer, beidseits an der Membran angeordneten Elektrode ist, nämlich einer Anode und Kathode. Zudem können Gasdiffusionslagen beidseitig der Membranelektrodenanordnung an den der Membran abgewandten Seiten der Elektroden angeordnet sein. Für eine Leistungssteigerung können mehrere Brennstoffzellen in Reihe geschaltet in einem Brennstoffzellenstapel zusammengefasst werden.

Im Betrieb wird der Brennstoff, insbesondere Wasserstoff (H₂) oder ein wasserstoffhaltiges Gasgemisch der Anode zugeführt, wo eine elektrochemische Oxidation von H₂ zu H⁺ unter Abgabe von Elektronen e- stattfindet. Über die Membran, welche die Reaktionsräume gasdicht voneinander trennt und elektrisch isoliert, erfolgt ein wassergebundener oder wasserfreier Transport der Protonen H⁺ - aus dem Anodenraum in den Kathodenraum. Die an der 5 Anode bereitgestellten Elektronen werden über eine elektrische Leitung der Kathode zugeleitet. Der Kathode wird Sauerstoff oder ein sauerstoffhaltiges Gasgemisch zugeführt, so dass eine Reduktion von O2 zu O₂**⁻**O2- unter Aufnahme der Elektronen stattfindet. Gleichzeitig reagieren im Kathodenraum die Sauerstoffanionen mit den über die Membran transportierten Protonen unter Bildung von Wasser. Es ist dabei auch ein sorgfältiges Temperaturmanagement erforderlich, so dass neben den Reaktanten ein Kühlmittel zur geeigneten Temperierung des Brennstoffzellenstapels, von den Reaktanten getrennt, an die jeweiligen aktiven Bereiche der Brennstoffzellen geführt wird, wobei eine Zu- und eine Abfuhr über sogenannte Medienführungen erfolgt. Neben der Membranelektrodenanordnung verfügt daher eine Brennstoffzelle in der Regel über eine Bipolarplatte, in der für jedes Medium eine Zuleitung, eine Ableitung sowie mindestens ein Medienkanal ausgebildet ist, der im Falle der Reaktanten in der Regel zu einem Flussfeld erweitert ist.

Die Mehrzahl von in einem Brennstoffzellenstapel zusammengefasster Brenstoffzellen wird im Allgemeinen mithilfe von Spannelementen mit einer Kraft im Bereich von mehreren 10.000 N verpresst, um einen ausreichenden Kontaktdruck an der katalysatorbeschichteten Membran zur Reduktion ohmscher Verluste zu erzielen und mittels der hohen Verpressung Undichtigkeiten zu vermeiden.

In einem Brennstoffzellenstapel werden zur Diagnose der fehlerfreien Funktion die elektrischen Spannungen jeder einzelnen Brennstoffzelle überwacht, wofür jede einzelne Brennstoffzelle elektrisch kontaktiert und mit einer Zellüberwachungseinheit verbunden wird. Diese elektrische Kontaktierung erfordert insbesondere bei der Verwendung des Brennstoffzellenstapels in einer Brennstoffzellenvorrichtung für ein Kraftfahrzeug die Einhaltung entsprechen der Qualitätsanforderungen. Bei Nutzung von Steckverbindern für jede der Brennstoffzellen wird in der Regel eine verriegelnde Steckverbindung gefordert, damit unter der Einwirkung von Vibrationen oder mechanischen Schocks die elektrische Kontaktierung nicht beeinträchtigt wird. An den verwendeten Bipolarplatten steht allerdings nur wenig Bauraum zur Verfügung und deren Komplexität wird weiter erhöht. Auch ist hinsichtlich des Konstruktions- und Montageaufwandes nachteilig, dass in der Regel Kabelverbindungen zwischen den Steckverbindern und der Zellüberwachungseinheit vorliegen.

Die DE 10 2017 215 560 A1 zeigt einen Brennstoffzellenstapel mit einer einen Zugkörper aufweisenden Spannvorrichtung, wobei am Zugkörper ein Kabel für eine Zellüberwachungseinheit befestigt ist. In der EP 1 037 296 A1 ist ein Brennstoffzellenstapel offenbart, bei dem die einzelnen Brennstoffzellen mittels Zugstangen miteinander verspannt sind. Die Zugstangen dienen zugleich als Stromschienen. Aus der EP 3 035 430 A1 ist ein elektrisch leitendes Spannelement bekannt, das zur Kontaktierung einer der Stromschienen dient. In der US 2007/0087237 A1 ist ein Brennstoffzellenstapel gezeigt, bei dem die Endplatten durch Zugstangen verspannt sind. In den Zugstangen sind Löcher ausgebildet zur Durchführung von elektrischen Verbindungen für eine Zellüberwachungseinheit.

Die US 2005/213409 A1 bezieht sich auf einen Brennstoffzellenstapel, der mit mehreren gestapelten Separatoren versehen ist, umfassend: Anschlüsse, die sich von den Separatoren erstrecken; Packung, in der eine Vielzahl von Durchgangslöchern ausgebildet sind, durch die die Anschlüsse eingeführt werden; ein Packungsgehäuse, das einen konkaven Abschnitt aufweist, der Seitenflächen der Packung umhüllt und einen Bodenfläche der Packung trägt, und Durchgangslöcher aufweist, durch die die Anschlüsse eingeführt werden; und ein Verbindungselement, das eine Druckfläche hat, die eine obere Fläche der Packung drückt, wobei Innenflächen der Durchgangslöcher in der Packung stehen ohne Zwischenraum in Kontakt mit Außenflächen der Anschlüsse.

Die JP 2014007152 A umfasst eine Brennstoffzelle, diese umfasst eine Membranelektrodenanordnung, einen Rahmen, einen ersten Separator, eine zweiten Separator und ein Gehäuse. In der Brennstoffzelle ist eine Stütze des Rahmens so vorstehend, dass sie zwischen einem Endabschnitt des zweiten Separators und einer oberen Platte des Gehäuses angeordnet ist. Die Stütze des Rahmens stützt auch den Endabschnitt des zweiten Separators.

Die DE 10 2018 127490 A1 betrifft eine Brennstoffzelle, die einen Spannungserfassungs-Zellenverbinder aufweisen kann, der zuverlässig an der Brennstoffzelle gehalten wird, ohne dass die Dicke der Brennstoffzelle auf eine Dicke größer als diejenige erhöht wird, die ursprünglich zur Stromerzeugung erforderlich war. Die Brennstoffzelle umfasst einen Aussparungsabschnitt, in den ein Zellenverbinder eingesetzt werden kann. In dem Aussparungsabschnitt ist aus einem Teil eines Separators ein Führungsabschnitt abgebildet, der einen in den Aussparungsabschnitt eingesetzten Zellenverbinder führen kann. In einem Abschnitt des Aussparungsabschnitts, der dem zweiten Verlängerungsabschnitt gegenüber liegt, ragt ein Vorsprung, der einen Teil einer isolierenden Harzbahn bzw. Harzschicht bildet, die zwischen einem Paar von Separatoren angeordnet ist, in Richtung des zweiten Verlängerungsabschnitts heraus.

Es ist die Aufgabe der vorliegenden Erfindung, einen verbesserten Brennstoffzellenstapel, eine verbesserte Brennstoffzellenvorrichtung sowie ein Kraftfahrzeug mit einer Brennstoffzellenvorrichtung bereit zu stellen, die die vorstehend genannten Nachteile mildern oder sogar beseitigen.

Diese Aufgabe wird durch einen Brennstoffzellenstapel mit den Merkmalen des Anspruchs 1, durch eine Brennstoffzellenvorrichtung mit den Merkmalen des Anspruchs 6 und durch ein Kraftfahrzeug mit den Merkmalen des Anspruchs 7 gelöst. Vorteilhafte Ausgestaltungen mit zweckmäßigen Weiterbildungen der Erfindung sind in den abhängigen Ansprüchen angegeben.

Der eingangs genannte Brennstoffzellenstapel zeichnet sich dadurch aus, dass die mechanische Sicherung der Zellspannungsabgriffe durch ein bereits vorhandenes, unverzichtbares Bauteil realisiert ist, das aufgrund seines Verwendungszweckes mechanisch sehr robust und stabil ausgeführt ist. Eine Lageänderung der Zellspannungsabgriffe wird durch das Spannelement unterbunden.

Bevorzugt ist dabei, wenn jeder Zellspannungsabgriff einen Stecker für eine Steckverbindung umfasst, und wenn die Stecker an dem Spannelement vormontiert sind, da so das Spannelement zugleich als Montagehilfe genutzt werden kann und die Fertigung des Brennstoffzellenstapels vereinfacht ist bei sinkenden Kosten.

In diesem Zusammenhang ist es vorteilhaft, wenn das Spannelement Durchführungen für zur Zellüberwachungseinheit geführte Kabel aufweist, um so auf kurzem Wege und gegen äußere Einflüsse geschützt die erforderlichen Verbindungen herstellen zu können.

Gemäß einer weiteren Ausführungsform besteht die Möglichkeit, dass jeder Stecker an einer der Brennstoffzellen angeordnet ist, und dass in dem Spannelement ein Befestigungsteil für die Stecker aufgenommen ist für die elektrischen Verbindungen mit der Zellüberwachungseinheit. Dabei sind die Stecker durch Steckbuchsen und das Befestigungsteil durch ein Spritzgussteil gebildet, durch das die elektrischen Verbindungen zu einer Leiterplatte geführt sind, die mit der Zellüberwachungseinheit verbunden ist.

Gemäß einer weiteren, bevorzugten Ausführungsform können die Stecker und das Befestigungsteil integral in einem Bauteil zusammengefasst sein.

Die Brennstoffzellen sind zwischen Endplatten durch die Spannelement verspannt, die als starre Zugbänder gebildet sind, so dass diese eine hohe mechanische Belastbarkeit aufweisen mit der Eignung zur Lagesicherung der Stecker oder Steckbuchsen.

Die vorstehend genannten Wirkungen und Vorteile gelten sinngemäß auch für eine Brennstoffzellenvorrichtung mit einem derartigen Brennstoffzellenstapel und für ein Kraftfahrzeug mit einer derartigen Brennstoffzellenvorrichtung.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verbindbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind. Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
Fig. 1 eine schematische Darstellung eines Brennstoffzellenstapels, der aus einer Mehrzahl von Brennstoffzellen aufgebaut ist, die durch Spannelemente verpresst sind, die zugleich der Sicherung von Steckverbindungen dienen,
Fig. 2 eine der Figur 1 entsprechende Darstellung mit an den Brennstoffzellen montierten Steckern, die durch einem Spannelement zugeordneten Verbindungselementen mit der Zellspannungsüberwachungseinheit verbunden sind, und
Fig. 3 eine der Figur 1 entsprechende Darstellung, bei der Stecker und ein Befestigungsteil in ein Spannelement integriert sind.

Eine Brennstoffzellenvorrichtung weist einen Brennstoffzellenstapel 1 mit einer Mehrzahl von in Stapelrichtung angeordneten Brennstoffzellen 2 auf.

Jede der Brennstoffzellen 2 umfasst eine Anode, eine Kathode sowie eine die Anode von der Kathode trennende, protonenleitfähige Membran. Die Membran ist aus einem Ionomer, vorzugsweise einem sulfonierten Polytetrafluorethylen-Polymer (PTFE) oder einem Polymer der perfluorierten Sulfonsäure (PFSA) gebildet. Alternativ kann die Membran auch als eine sulfonierte Hyd-rocarbon-Membran gebildet sein.

Über einen Anodenraum kann der Anode Brennstoff, insbesondere Wasserstoff aus einem Brennstofftank zugeführt werden. In einer Polymerelektrolytmembranbrennstoffzelle (PEM-Brennstoffzelle) werden an der Anode Brennstoff oder Brennstoffmoleküle in Protonen und Elektronen aufgespaltet. Die PEM lässt die Protonen hindurch, ist aber undurchlässig für die Elektronen. An der Anode erfolgt beispielsweise die Reaktion: 2H₂ -> 4H⁺ + 4e⁻(Oxidation/Elektronenabgabe) Während die Protonen durch die PEM zur Kathode hindurchtreten, werden die Elektronen über einen externen Stromkreis an die Kathode oder an einen Energiespeicher geleitet.

Über einen Kathodenraum kann der Kathode das Kathodengas (zum Beispiel Sauerstoff oder Sauerstoff enthaltende Luft) zugeführt werden, so dass kathodenseitig die folgende Reaktion stattfindet: O₂ + 4H⁺ +4e⁻ -> 2H₂O (Reduktion/Elektronenaufnahme) Der Brennstoffzellenstapel 1 verfügt auch über eine durch Spannelemente 3 gebildete Spannvorrichtung für das Zusammendrücken der Brennstoffzellen 2.

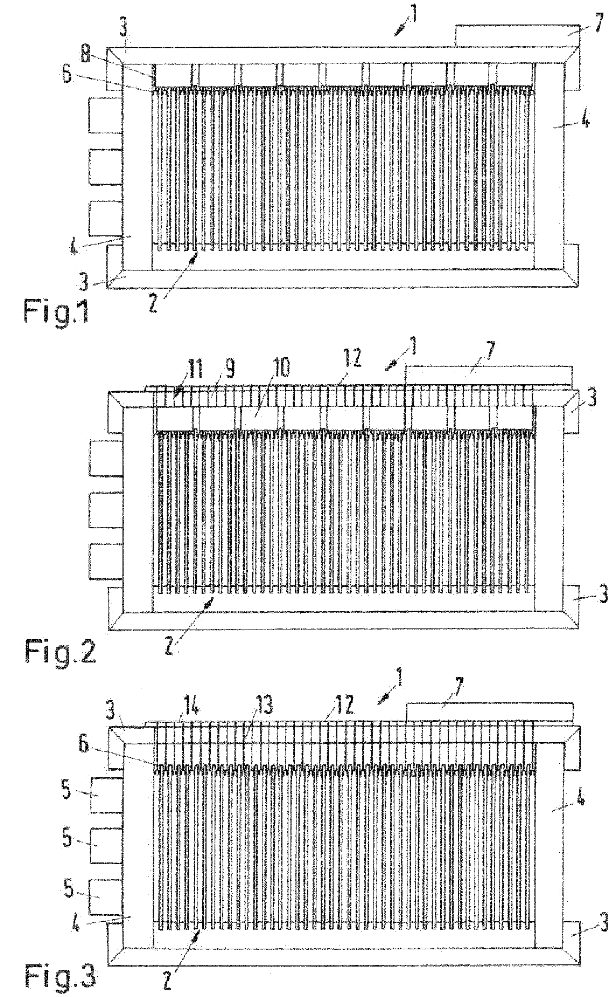

Den endständigen Brennstoffzellen 2 sind dabei Endplatten 4 zugeordnet, an denen für die Krafteinleitung die Spannvorrichtung angeschlossen ist, wobei an einer der Endplatten 4 oder auch an beiden Endplatten 4 die Medienführungen 5 (nur in Fig. 3 gezeigt) für den Brennstoff, das Oxidationsmittel und ein Kühlmittel angeordnet sind, an den in der Zeichnung dargestellten Ausführungsbeispielen an der linken Endplatte 4. Die Spannelemente 3 sind als starre Zugbänder gebildet, die insbesondere aus Metall gefertigt sein können mit den entsprechenden mechanischen Eigenschaften hinsichtlich der Festigkeit und Biegesteifigkeit.

Der Brennstoffzellenstapel 1 verfügt weiterhin vorzugsweise für jede der Brennstoffzellen 2 über einen Zellspannungsabgriff 6 zur elektrischen Verbindung mit einer Zellüberwachungseinheit 7, um so eine Diagnose der fehlerfreien Funktion zu ermöglichen. Die Zellspannungsabgriffe 6 sind durch mindestens eines der Spannelemente 3 mechanisch hinsichtlich der Verbindung mit den Brennstoffzellen 2 gesichert.

Figur 1 zeigt dabei eine Ausführungsform, bei der jeder Zellspannungsabgriff 6 einen Stecker 8 für eine Steckverbindung umfasst, so dass bei dieser Ausführungsform die zusätzliche mechanische Sicherung im Vordergrund steht. Zusätzlich können aber auch die Stecker 8 an dem Spannelement 3 vormontiert sein, um so das Spannelement 3 als Montagehilfe nutzen zu können, wo bei das Spannelement 3 Durchführungen für zur Zellüberwachungseinheit 7 geführte Kabel aufweist.

Die Figur 2 zeigt eine Ausführungsform, bei der jeder Stecker 8 an einer der Brennstoffzellen 2 angeordnet ist, wobei in dem Spannelement 3 ein Befestigungsteil 9 für die Stecker 8 aufgenommen ist für die elektrischen Verbindungen mit der Zellüberwachungseinheit 7, und zwar indem die Stecker 8 durch Steckbuchsen 10 und das Befestigungsteil 9 durch ein Spritzgussteil 11 gebildet sind, durch das die elektrischen Verbindungen zu einer Leiterplatte 12 geführt sind, die mit der Zellüberwachungseinheit 7 elektrisch und insbesondere mechanisch verbunden ist.

Figur 3 zeigt eine Ausführungsform, bei der weiterhin die Stecker 6 und das Befestigungsteil 9 integral in einem Bauteil 13 zusammengefasst sind, das in das Spannelement 3 integriert ist. Die Kontaktierung ist an dem Bauteil 13 mit einem Überstand 14 ausgeführt, so dass über die Leiterplatte 12 die Anbindung an die Zellüberwachungseinheit 7 mit Lötkontakten realisiert werden kann.

Brennstoffzellenvorrichtungen mit einem derartigen Brennstoffzellenstapel zeigen ihre Vorteile insbesondere bei der Anwendung in einem Kraftfahrzeug, da dort besondere mechanische Belastungen und Erschütterungen vorliegen.

### BEZUGSZEICHENLISTE:

- 1: Brennstoffzelle
- 2: Elektrolytmembran
- 3: erste Seite der Membran
- 4: Elektrode / Anode
- 5: zweite Seite der Membran
- 6: Elektrode / Kathode
- 7: anodenseitige Gasdiffusionslage
- 8: kathodenseitige Gasdiffusionslage
- 9: Bipolarplatte Brennstoffgas
- 10: Bipolarplatte Kathodengas
- 11: Brennstoffflussfeld
- 12: Kathodengasflussfeld
- 13: Katalysatorpartikel
- 14: Trägerpartikel
- 15: Ionomerbinder
- 16: Katalysatorpaste
- 17: Auftragungsmittel
- 18: Kammer
- 19: Trocknungseinheit
- 20: Folienbahn
- 21: Förderrichtung
- 22: Strömungsrichtung
- 23: Elektrolytmembran-Zuführvorrichtung
- 24: Bahnpfad
- 25: Coil
- 26: Zuschnitt
- 27: Rand

## Patentansprüche

1. Brennstoffzellenstapel (1) mit einer Mehrzahl von in Stapelrichtung angeordneten, mittels Spannelementen (3) verspannten Brennstoffzellen (2), von denen mindestens eine, vorzugsweise jede einen Zellspannungsabgriff (6) aufweist zur elektrischen Verbindung mit einer Zellüberwachungseinheit (7), wobei dass der mindestens eine Zellspannungsabgriff (6) durch mindestens eines der Spannelemente (3) mechanisch hinsichtlich der Verbindung mit den Brennstoffzellen (2) gesichert sind, **dadurch gekennzeichnet, dass** jeder Zellspannungsabgriff (6) einen Stecker (8) für eine Steckverbindung umfasst, und dass die Stecker (8) an dem Spannelement (3) vormontiert sind, oder dass jeder Stecker (8) an einer der Brennstoffzellen (2) angeordnet ist, und dass in dem Spannelement (3) ein Befestigungsteil (9) für die Stecker (8) aufgenommen ist für die elektrischen Verbindungen mit der Zellüberwachungseinheit (7).

2. Brennstoffzellenstapel (1) nach Anspruch 1, **dadurch gekennzeichnet, dass** das Spannelement (3) Durchführungen für zur Zellüberwachungseinheit (7) geführte Kabel aufweist.

3. Brennstoffzellenstapel (1) nach Anspruch 1, **dadurch gekennzeichnet, dass** die Stecker (8) durch Steckbuchsen (10) und das Befestigungsteil (9) durch ein Spritzgussteil (11) gebildet sind, durch das die elektrischen Verbindungen zu einer Leiterplatte (12) geführt sind, die mit der Zellüberwachungseinheit (7) verbunden ist.

4. Brennstoffzellenstapel (1) nach Anspruch 1, **dadurch gekennzeichnet, dass** die Stecker (8) und das Befestigungsteil (9) integral in einem Bauteil (13) zusammengefasst sind.

5. Brennstoffzellenstapel (1) nach einem der Ansprüche 1 bis 4, **dadurch gekennzeichnet, dass** die Brennstoffzellen (2) zwischen Endplatten (4) durch die Spannelement (3) verspannt sind, die als starre Zugbänder gebildet sind.

6. Brennstoffzellenvorrichtung mit einem Brennstoffzellenstapel (1) nach einem der Ansprüche 1 bis 5.

7. Kraftfahrzeug mit einer Brennstoffzellenvorrichtung nach Anspruch 6.

## Claims

1. A fuel cell stack (1) having a plurality of fuel cells (2) which are arranged in stacking direction, are clamped by means of clamping elements (3) and of which at least one, preferably each, has a cell voltage contact (6) for electrical connection to a cell monitoring unit (7), the at least one cell voltage contact (6) being mechanically secured by at least one of the clamping elements (3) with respect to the connection to the fuel cells (2), **characterized in that** each cell voltage contact (6) comprises a plug (8) for a plug connection, and **in that** the plugs (8) are preassembled on the clamping element (3), or **in that** each plug (8) is arranged on one of the fuel cells (2), and **in that** a mounting part (9) for the plugs (8) is accommodated in the clamping element (3) for the electrical connections to the cell monitoring unit (7).

2. The fuel cell stack (1) according to claim 1, **characterized in that** the clamping element (3) has bushings for cables routed to the cell monitoring unit (7).

3. The fuel cell stack (1) according to claim 1, **characterized in that** the plugs (8) are formed by sockets (10) and the mounting part (9) is formed by an injection-molded part (11)through which the electrical connections are routed to a printed circuit board (12) which is connected to the cell monitoring unit (7).

4. The fuel cell stack (1) according to claim 1, **characterized in that** the plugs (8) and the mounting part (9) are integrally combined in one component (13).

5. The fuel cell stack (1) according to any one of claims 1 to 4, **characterized in that** the fuel cells (2) are braced between end plates (4) by the clamping elements (3), which are formed as rigid tension bands.

6. A fuel cell device comprising a fuel cell stack (1) according to any one of claims 1 to 5.

7. A motor vehicle with a fuel cell device according to claim 6.

## Revendications

1. Empilement de piles à combustible (1) avec une pluralité de piles à combustible (2) disposées en direction d'empilement et serrées au moyen d'éléments de serrage (3), dont au moins une, de préférence chacune, présente une prise de tension de pile (6) pour la connexion électrique avec une unité de surveillance de pile (7), dans lequel la au moins une prise de tension de pile (6) est bloquée mécaniquement par au moins un des éléments de serrage (3) concernant la connexion avec les piles à combustible (2), **caractérisé en ce que** chaque prise de tension de pile (6) comprend un connecteur (8) pour une connexion enfichable, et **en ce que** les connecteurs (8) sont prémontés sur l'élément de serrage (3), ou **en ce que** chaque connecteur (8) est disposé sur une des piles à combustible (2), et **en ce qu'**une pièce de fixation (9) pour les connecteurs (8) est logée dans l'élément de serrage (3) pour les connexions électriques avec l'unité de surveillance de pile (7).

2. Empilement de piles à combustible (1) selon la revendication 1, **caractérisé en ce que** l'élément de serrage (3) présente des traversées pour des câbles guidés vers l'unité de surveillance de pile (7).

3. Empilement de piles à combustible (1) selon la revendication 1, **caractérisé en ce que** les connecteurs (8) sont formés par des douilles de connecteur (10) et la pièce de fixation (9) par une pièce moulée par injection (11), à travers laquelle les connexions électriques sont guidées vers une carte de circuit imprimé (12), qui est connectée à l'unité de surveillance de pile (7).

4. Empilement de piles à combustible (1) selon la revendication 1, **caractérisé en ce que** les connecteurs (8) et la pièce de fixation (9) sont assemblés d'un seul tenant dans un composant (13).

5. Empilement de piles à combustible (1) selon l'une quelconque des revendications 1 à 4, **caractérisé en ce que** les piles à combustible (2) sont serrées entre des plaques d'extrémité (4) par les éléments de serrage (3), qui sont formés en tant que bandes de traction rigides.

6. Dispositif de piles à combustible avec un empilement de piles à combustible (1) selon l'une quelconque des revendications 1 à 5.

7. Véhicule automobile avec un dispositif de pile à combustible selon la revendication 6.
